# FASCICULE DE BREVET EUROPEEN

(11) **EP 2 893 158 B1**
(45) Date de publication et mention de la délivrance du brevet: **02.11.2016**
(21) Numéro de dépôt: 13765372.1
(22) Date de dépôt: 05.09.2013
(51) Int. Cl.: F01D 21/00, F02K 3/02, G01P 3/48, G01L 3/10, G01L 5/13

(54) **TURMOMACHINE COMPORTANT DES MOYENS DE MESURE DE LA VITESSE ET DU COUPLE DE TORSION D'UN ARBRE DE LA TURBOMACHINE ET PROCEDE DE SURVEILLANCE DUDIT ARBRE**
TURBINENMOTOR MIT EINER VORRICHTUNG ZUM MESSEN DER GESCHWINDIGKEIT UND DES DREHMOMENTS EINER WELLE DES TURBINENMOTORS UND VERFAHREN ZUR ÜBERWACHUNG DER WELLE
TURBINE ENGINE COMPRISING A MEANS FOR MEASURING THE SPEED AND TORQUE OF A SHAFT OF THE TURBINE ENGINE AND METHOD FOR MONITORING SAID SHAFT

(30) Priorité: 06.09.2012 FR 1258317
(43) Date de publication de la demande: 15.07.2015
(73) Titulaire: Safran Aircraft Engines, 75015 Paris (FR)
(72) Inventeur: CURLIER, Augustin, F-77550 Moissy Cramayel Cedex (FR); BELMONTE, Olivier, F-77550 Moissy Cramayel Cedex (FR); LE GOUELLEC, Gilles, F-77550 Moissy Cramayel Cedex (FR)
(74) Mandataire: Gevers & Orès
(86) Numéro de dépôt international: PCT/FR2013/052051
(87) Numéro de publication internationale: WO 2014/037673

(56) Documents cités:
- FR-A1- 2 373 044
- FR-A1- 2 595 821
- GB-A- 604 182
- GB-A- 617 064
- US-A- 4 682 505
- US-A1- 2004 050 178

## Description

### DOMAINE TECHNIQUE GENERAL ET ART ANTERIEUR

La présente invention concerne le domaine des turbomachines, en particulier, la mesure de la vitesse et la mesure du couple de torsion d'un arbre de la turbomachine.

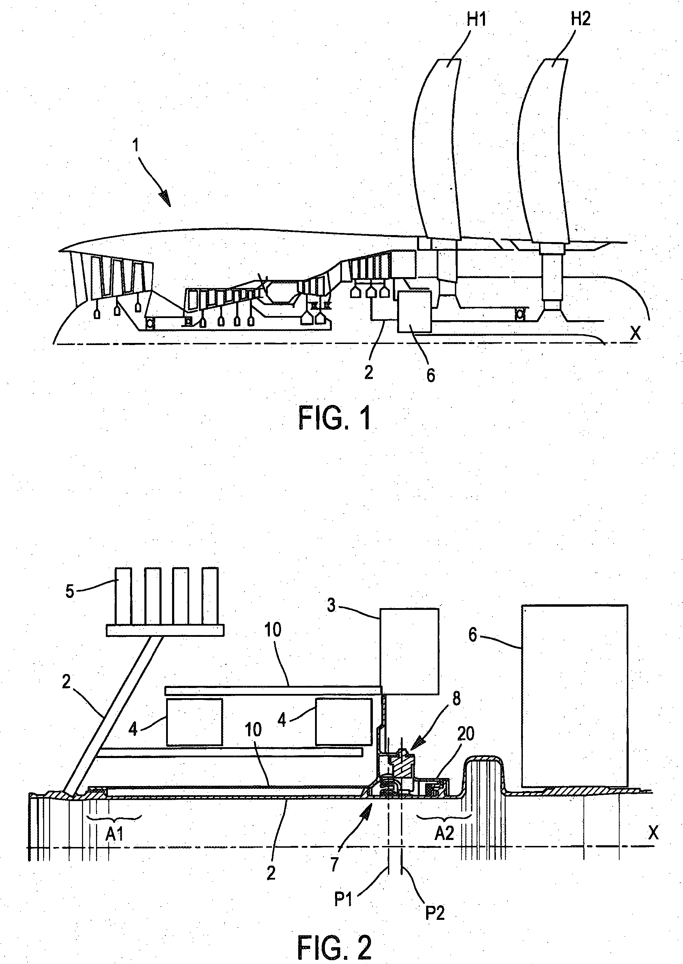

A titre d'exemple, en référence à la figure 1, une turbomachine 1 du type « open-rotor » comporte deux hélices H1, H2 entraînées par un arbre de turbine 2 par l'intermédiaire d'un train épicycloïdal 6. De manière classique, la turbomachine 1 comporte des moyens de mesure de la vitesse de l'arbre de turbine afin de surveiller, en particulier, une survitesse de l'arbre de turbine 2. La turbomachine comporte également des moyens de mesure du couple de torsion afin d'éviter tout activation des moyens de protection contre un surcouple, par exemple, des sections fusibles telles que connues par la demande de brevet FR2910948 de la société HISPANO SUIZA.

Il a été proposé des moyens de mesure de la vitesse et les moyens de mesure du couple de torsion qui sont traditionnellement indépendants dans la turbomachine et possèdent une masse et un encombrement élevés ce qui pénalise le rendement de la turbomachine. Il faut tenir compte de la masse et de l'encombrement des moyens de mesure, des servitudes nécessaires à leurs bons fonctionnements et des contraintes de montage et d'intégration dans un environnement encombré. Ces moyens de mesure sont par exemple utilisés en : protection contre le sur-couple, limiteur dans la régulation, affichage pour cockpit, instrumentation en particulier pour le monitoring, etc.

Selon une autre conception connue, il a été proposé, dans les documents US-4.682.505-A, FR-2.373.044-A1 et US-2004/050178, des moyens de mesure du couple de torsion basés sur le déplacement relatif d'éléments, notamment des dents, portées par deux roues solidaires de l'arbre dont on désire mesurer le couple de torsion. Ces moyens n'incluent toutefois pas de possibilité de mesure de la vitesse, dont la mesure est effectuée à l'aide d'un autre élément tournant, qui est décalé axialement. Les conceptions présentées dans ces documents sont donc particulièrement encombrantes.

Un des objectifs de la présente demande est de proposer une turbomachine comportant des moyens de mesure de la vitesse et du couple de torsion d'un arbre de la turbomachine dont la masse et l'encombrement sont limités tout en conservant une précision de mesure équivalente à l'art antérieur.

### PRESENTATION GENERALE DE L'INVENTION

A cet effet, l'invention concerne une turbomachine, notamment pour aéronef, comportant au moins un arbre axial monté rotatif dans un carter de la turbomachine, la turbomachine comportant :
- une pièce annulaire de référent solidaire d'une première partie de l'arbre de la turbomachine, la pièce de référent comportant des dents de référent longitudinales courtes et longues,
- des premiers moyens de détection du passage des dents de référent courtes et longues dans un premier plan transversal de manière à mesurer la vitesse de l'arbre de la turbomachine autour de son axe ;
- une pièce annulaire dé rapporteur solidaire d'une deuxième partie de l'arbre de la turbomachine distante de ladite première partie, la pièce de rapporteur comportant des dents de rapporteur longitudinales, et
- des deuxièmes moyens de détection du passage des dents de référent longues et des dents de rapporteur dans un deuxième plan transversal de manière à mesurer le couple de torsion dé l'arbre de la turbomachine.

Dans la présente demande, on entend par dents d'une pièce annulaire des éléments qui s'étendent en direction longitudinale et sont espacés les uns des autres en direction circonférentielle.

Les dents peuvent être séparées les une des autres par des encoches formées à une extrémité de la pièce annulaire. Dans ce cas, les dents ont des extrémités axiales (distales) libres, ces dents étant reliées à une partie annulaire de la pièce par leurs extrémités axiales opposées (proximales).

En variante, les dents peuvent être séparées les unes des autres par des lumières formées dans la pièce annulaire. Dans ce cas, les dents n'ont pas d'extrémités axiales libres, leurs extrémités proximales étant reliées à une partie annulaire de la pièce et leurs extrémités distales étant reliées à une autre partie annulaire de la pièce.

De manière avantageuse, les dents de référent longues permettent, d'une part, de mesurer la vitesse dans un premier plan transversal et, d'autre part, de mesurer le couple de torsion dans un deuxième plan transversal. La pièce de référent et la pièce de rapporteur de la turbomachine permettent ainsi de mesurer simultanément deux paramètres de l'arbre. Le nombre de pièces utilisées pour les mesures est donc plus faible par comparaison à l'art antérieur ce qui limite la masse et l'encombrement de la turbomachine. En outre, le montage et la maintenance sont plus simples à mettre en oeuvre par comparaison à l'art antérieur.

De préférence, les dents de référent courtes et les dents de rapporteur sont à des distances radiales différentes de l'axe de la turbomachine. De préférence encore, chaque dent de référent longue comporte une partie proximale et une partie distale qui sont à des distances radiales différentes de l'axe de la turbomachine. De préférence toujours, la partie distale des dents de référent longues est à la même distance radiale de l'axe de la turbomachine des dents de rapporteur. De manière préférée, la partie proximale de chaque dent de référent longue s'étend à la même distance radiale que les dents de référent courtes.

Ainsi, les premiers moyens de détection et les deuxièmes moyens de détection peuvent s'étendre à des distances radiales différentes de l'axe de la turbomachine de manière à limiter leur encombrement. De préférence, les premiers moyens de détection et les deuxièmes moyens de détection sont en quinconce.

Selon un aspect préféré de l'invention, la partie proximale d'une dent de référent longue est radialement extérieure à sa partie distale de manière à limiter les efforts centrifuges appliqués à la partie distale. En effet, plus les dents sont longues, plus les dents ont tendance à s'écarter radialement vers l'extérieur au cours de la rotation de l'arbre. Lorsque l'on diminue le rayon d'implantation de la partie distale des dents longues, cela permet de réduire les efforts centrifuges appliqués aux dents et donc la déflexion de celles-ci.

Dans un mode particulier de réalisation de l'invention, les dents de référent courtes et les parties proximales des dents de référent longues sont formées par une partie annulaire ajourée de la pièce annulaire de référent.
Le fait de former des dents en ajourant une pièce annulaire permet :
- de rigidifier l'ensemble sous centrifuge (très intéressant), et
- de rendre les deux pièces annulaires ou roues phoniques (référence et mesure) assez similaires, ce qui permet de symétriser d'une roue à l'autre les phénomènes d'induction de courants de Foucault dans les dents et de rendre la mesure plus précise (perturbations similaires pour les dents sur roue phonique de référence et celles de roue phonique de mesure de couple)

Les parties distales des dents de référent longues peuvent s'étendre longitudinalement depuis ladite partie annulaire ajourée. La partie distale de chaque dent de référent longue peut être alignée axialement avec la partie proximale de cette dent. En variante, la partie distale de chaque dent de référent longue est décalée angulairement de la partie proximale de cette dent.

De préférence, la turbomachine comporte le même nombre de dents de référent longues et de dents de rapporteur ce qui permet de mesurer l'évolution de leur écart angulaire dans le deuxième plan transversal.

De manière préférée, la distance axiale entre le premier plan transversal et le deuxième plan transversal résulte d'un compromis entre une compacité maximale de la turbomachine et la protection contre les interférences entre des capteurs de deux plans distincts. De préférence, la distance axiale est fonction de la nature des capteurs utilisés comme moyens de détection.

De préférence, les premiers moyens de détection et les deuxièmes moyens de détection sont à des distances radiales différentes de l'axe de la turbomachine de manière à limiter leur encombrement. De préférence encore, la distance radiale des moyens de détection est fonction de la distance radiale des dents surveillées par lesdits moyens de détection de manière à conserver une distance minimale d'entrefer.

De préférence encore, les premiers moyens de détection et les deuxièmes moyens de détection se présentent respectivement sous la forme de capteurs inductifs de vitesse et de capteurs inductifs de couple, les capteurs de vitesse et les capteurs de couple étant identiques. De tels capteurs inductifs sont particulièrement adaptés pour détecter le passage de dents réalisées en matériau ferromagnétiques.

Selon un aspect de l'invention, les capteurs de vitesse et les capteurs dé couple sont solidaires du carter de la turbomachine, de préférence, via une pièce de support. De manière préférée, les capteurs de vitesse et les capteurs de couple sont disposés de manière alternée, en quinconce par exemple, à la circonférence de ladite pièce de support ce qui permet de limiter leur encombrement.

L'invention concerne également un procédé de surveillance d'un arbre axial d'une turbomachine monté rotatif dans un carter de la turbomachine, la turbomachine comportant une pièce annulaire de référent solidaire d'une première partie de l'arbre de la turbomachine, la pièce de référent comportant des dents de référent longitudinales courtes et longues, une pièce annulaire de rapporteur solidaire d'une deuxième partie de l'arbre de la turbomachine distante de ladite première partie, la pièce de rapporteur comportant des dents de rapporteur longitudinales, le procédé comportant :
- une étape de détection du passage des dents de référent courtes et longues dans un premier plan transversal de manière à mesurer la vitesse de l'arbre de la turbomachine autour de son axe ; et
- une étape de détection du passage des dents de référent longues et des dents de rapporteur dans un deuxième plan transversal de manière à mesurer le couple de torsion de l'arbre de la turbomachine.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique en coupe axiale d'une turbomachine classique comportant deux hélices (déjà commentée) ;
- la figure 2 est une représentation schématique en coupe axiale d'une turbomachine selon l'invention avec une pièce de référent et une pièce de rapporteur ;
- la figure 3 est une représentation en perspective schématique de la pièce de référent et de la pièce de rapporteur solidaires d'un arbre de la turbomachine ;
- la figure 4 est une représentation en perspective schématique de la pièce de référent ;
- la figure 5 est une représentation en coupe axiale de la fixation amont de la pièce de référent à l'arbre de la turbomachine ;
- la figure 6 est une représentation en perspective schématique de la pièce de rapporteur ;
- la figure 7 est une représentation en coupe axiale de la fixation de la pièce de rapporteur à l'arbre de la turbomachine ;
- la figure 8 est une représentation en perspective des capteurs inductifs montés sur un support ;
- la figure 9 est une représentation en perspective partielle de la turbomachine au cours de la mesure de la vitesse et de la mesure du couple de torsion par les capteurs inductifs lors du passage des dents de référent et des dents de rapporteur ;
- la figure 10 présente plusieurs profils de tension mesurés par un capteur de couple lors du passage d'une dent de référent (trait épais), d'une dent de rapporteur pour un arbre de turbine sans torsion (trait discontinu) et d'une dent de rapporteur pour un arbre de turbine avec torsion (trait fin) ;
- la figure 11 est une représentation schématique en coupe axiale d'une deuxième forme de réalisation d'une turbomachine selon l'invention avec une pièce de référent et une pièce de rapporteur solidaires d'un arbre de la turbomachine ;
- la figure 12 est une vue similaire à celle de la figure 3 et représentant une troisième forme de réalisation de l'invention ;
- la figure 13 est une vue similaire à celle de la figure 8 pour la troisième forme de réalisation de l'invention de la figure 12 ; et
- la figure 14 est une vue similaire à celle de la figure 2 pour la troisième forme de réalisation de l'invention de la figure 12.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour une turbomachine du type « open-rotor » qui comporte deux hélices non carénées reliées à un train épicycloïdal de la turbomachine. La turbomachine comporte un arbre axial de turbine qui fournit un couple au train épicycloïdal qui est distribué aux deux hélices. Par la suite, les termes « amont » et « aval » sont définis par rapport à la direction des gaz dans la turbomachine qui circulent de l'amont vers l'aval.

Selon l'invention, la vitesse de rotation et le couple de torsion de l'arbre de turbine sont mesurés de manière à surveiller tout phénomène de survitesse ou de surcouple. Il va de soi que l'invention s'applique à tout arbre d'une turbomachine, en particulier, un arbre de turboréacteur.

En référence à la figure 2, la turbomachine 1 comporte un arbre de turbine 2 monté rotatif dans un carter annulaire 3 de la turbomachine 1 par l'intermédiaire de deux paliers de guidage 4. Dans cet exemple, des aubes de rotor 5 sont solidaires de l'arbre de turbine 2 pour entraîner des hélices (non représentées) par l'intermédiaire d'un train épicycloïdal 6 de la turbomachine. Dans cet exemple, de manière connue par l'homme du métier, les aubes de rotor 5 sont reliées à l'arbre de turbine 2 par un tourillon (non référencé).

Selon l'invention, toujours en référence à la figure 2, la turbomachine 1 comporte une pièce annulaire de référent 10, solidaire d'une première partie A1 de l'arbre 2 de la turbomachine 1 et une pièce annulaire de rapporteur 20 solidaire d'une deuxième partie A2 de l'arbre 2 de la turbomachine 1 qui est distante de ladite première partie A1. Dans cet exemple, la pièce de référent 10 est fixée sur une première partie amont A1 de l'arbre 2 tandis que la pièce de rapporteur 20 est fixée sur une deuxième partie aval A2 de l'arbre 2.

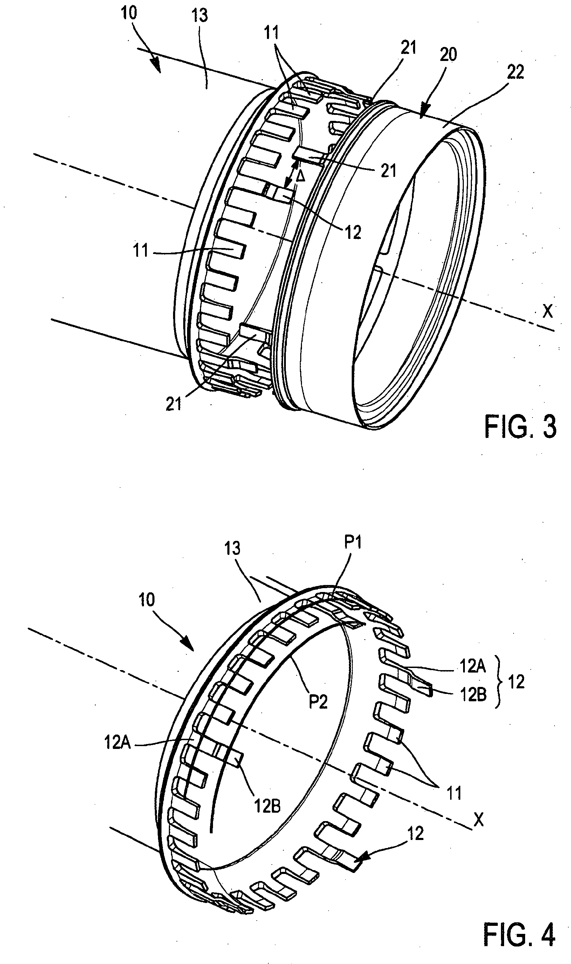

Comme illustré à la figure 3, la pièce de référent 10 et la pièce de rapporteur 20 sont alignées longitudinalement selon l'axe X de la turbomachine 1. La pièce de référent 10 comporte des dents de référent longitudinales courtes 11 et longues 12 tandis que la pièce de rapporteur 20 comportent des dents de rapporteur longitudinales 21.

En référence à la figure 2, la turbomachine comporte en outre des premiers moyens de détection 7 du passage des dents de référent 11, 12 dans un premier plan transversal P1 de manière à mesurer la vitesse de l'arbre 2 de la turbomachine 1 autour de son axe X et des deuxièmes moyens de détection 8 du passage des dents de référent longues 12 et des dents de rapporteur 21 dans un deuxième plan transversal P2 pour déterminer l'écart angulaire entre une dent de référent longue 12 et une dent de rapporteur 21 de manière à mesurer le couple de torsion de l'arbre 2 de la turbomachine 1.

### Pièce de référent 10

En référence à la figure 4, la pièce de référent 10 est une pièce annulaire qui s'étend longitudinalement selon l'axe X de la turbomachine. Comme indiqué précédemment, la pièce de référent 10 comporte des dents de référent longitudinales courtes 11 et longues 12. Les dents longitudinales 11, 12 s'étendent longitudinalement par rapport à l'axe X de la turbomachine depuis le corps cylindrique 13 de la pièce de référent 10. Dans cet exemple de réalisation, les dents de référent 11, 12 s'étendent de l'amont vers l'aval mais il va de soi qu'elles pourraient aussi s'étendre de l'aval vers l'amont comme cela sera présenté par la suite.

Les dents de référent 11, 12 sont des dents ferromagnétiques adaptées pour faire réagir des capteurs inductifs comme cela sera présenté par la suite.

En référence à la figure 4, les dents de référent 11, 12 (courtes ou longues) sont réparties à la circonférence du corps cylindrique 13 de la pièce de référent 10. Elles sont séparées les unes des autres par des encoches radiales présentes à l'extrémité aval de la pièce de référent 10. Les dents de référent courtes 11 ont leurs extrémités aval ou distales qui sont libres, leurs extrémités amont ou proximales étant reliées au corps cylindrique 13 de la pièce. Dans cet exemple, la pièce de référent 10 comporte trente dents dont cinq longues 12 et vingt-cinq courtes 11. De préférence, les dents de référent longues 12 sont réparties à la circonférence du corps cylindrique 13 de la pièce de référent 10.

En référence à la figure 4, les dents de référent courtes 11 s'étendent toutes à la même distance radiale de l'axe X de la turbomachine. Les dents de référent longues 12 comportent une partie proximale 12A terminée par une partie distale 12B. Autrement dit, chaque dent de référent longue 12 est terminée à son extrémité par une partie distale 12B.

La partie proximale 12A de chaque dent de référent longue 12 s'étend à la même distance radiale de l'axe X de la turbomachine que les dents de référent courtes 11. En outre, les dents de référent courtes 11 et la partie proximale 12A des dents de référent longues 12 s'étendent dans un même plan transversal P1 à l'axe X de la turbomachine. Ce premier plan transversal P1 forme le plan de mesure de la vitesse comme cela sera détaillé par la suite.

Autrement dit, les dents de référent courtes 11 et la partie proximale 12A des dents de référent longues 12 forment un ensemble de dents, désignées dents de vitesse, réparties à la circonférence de la pièce de référent 10, dans un même transversal P1 et à la même distance radiale de l'axe X de la turbomachine. De préférence, les dents de référent courtes 11 et la partie proximale 12A des dents de référent longues 12 possèdent les mêmes dimensions.

La partie distale 12B de chaque dent de référent longue 12 est décalée radialement par rapport à sa partie proximale 12A. Autrement dit, la partie distale 12B et la partie proximale 12A s'étendent à des distances radiales différentes de l'axe X de la turbomachine. Comme illustré à la figure 4, la partie distale 12B de chaque dent de référent longue 12 s'étend à une distance radiale de l'axe X de la turbomachine qui est inférieure à la distance radiale pour les dents de référent courtes 11. Autrement dit, la partie distale 12B de chaque dent de référent longue 12 est plus proche de l'axe de la turbomachine que sa partie proximale 12A de manière à limiter sa déformation centrifuge liée à sa longueur en conférant de la raideur à la dent de référent longue 12.

La partie distale 12B des dents de référent longues 12 s'étendent dans un même pian transversal P2 à l'axe X de la turbomachine. Ce deuxième plan transversal P2 forme le plan de mesure du couple de torsion comme cela sera détaillé par la suite.

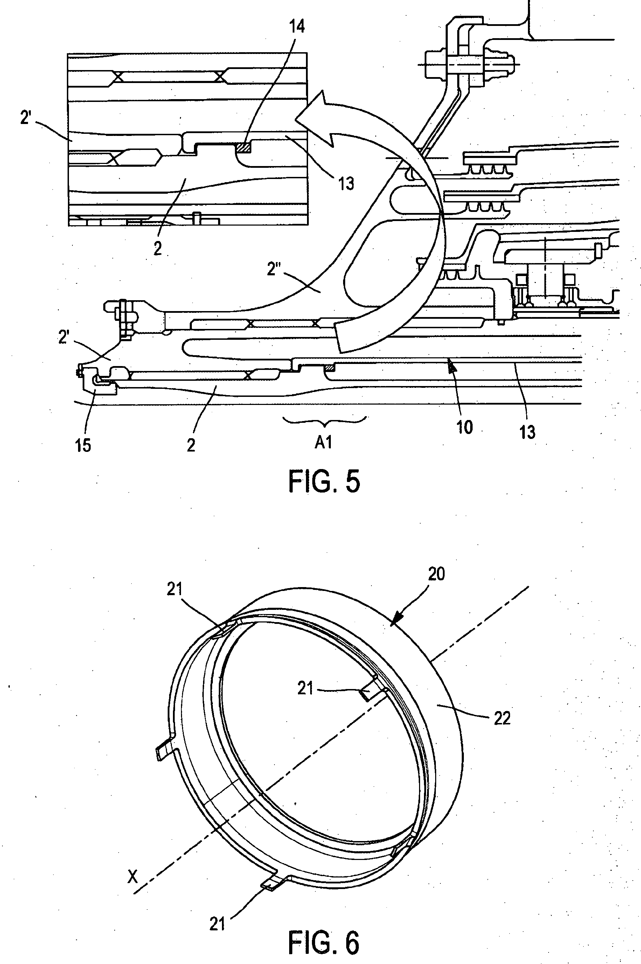

Comme illustré aux figures 2 et 5, la pièce de référent 10 est montée de manière solidaire à l'arbre de turbine 2, extérieurement à ce dernier. Dans l'exemple de la figure 5, l'extrémité amont de la pièce de référent 10 comporte des cannelures 14 adaptées pour coopérer avec des cannelures de l'arbre de turbine 2 afin d'assurer, d'une part, une solidarisation axiale et, d'autre part, une solidarisation en rotation au niveau de la première partie amont A1 de l'arbre de turbine 2. Il va de soi que d'autres moyens de solidarisation pourraient également convenir. De préférence, la pièce de référent 10 comporte des moyens de détrompage pour faciliter son montage.

Lors du montage, la pièce de référent 10 est insérée de l'amont vers l'aval pour se fixer à l'arbre de turbine 2 avant d'être verrouillée par un écrou de verrouillage. Dans cet exemple, en référence à la figure 5, la turbomachine comporte un arbre intermédiaire 2' monté entre l'arbre de turbine 2 et un tourillon 2", l'arbre intermédiaire 2', l'arbre de turbine 2 et le tourillon 2" étant solidaires en rotation.

La liaison entre l'arbre de turbine 2 et l'arbre intermédiaire 2' est réalisée au moyen d'une liaison cannelée de manière à ce qu'un élément de centrage de la partie de la liaison cannelée située sur l'arbre intermédiaire 2' appuie sur la pièce référent 10 lors de l'assemblage, le blocage axial étant réalisé lors du serrage de l'écrou 15 situé à l'extrémité gauche sur la figure 5.

Comme illustré à la figure 2, la pièce de référent 10 s'étend longitudinalement autour de l'arbre de turbine 2 de manière à ce que les dents de référent 11, 12 s'étendent à distance de la première partie amont A1 de l'arbre de turbine 2 à laquelle la pièce de référent 10 est fixée. Il en résulte que les dents de référent 11, 12 de la pièce de référent 10 permettent de représenter le couple de torsion reçu par l'arbre de turbine au niveau de la première partie amont A1 de l'arbre de turbine 2.

### Pièce de rapporteur 20

En référence à la figure 6, la pièce de rapporteur 20 est une pièce annulaire qui s'étend longitudinalement selon l'axe X de la turbomachine. Comme indiqué précédemment, la pièce de rapporteur 20 comporte des dents de rapporteur longitudinales 21. Les dents de rapporteur 21 s'étendent longitudinalement par rapport à l'axe X de la turbomachine depuis le corps cylindrique 22 de la pièce rapporteur 20. Dans cet exemple de réalisation, les dents de rapporteur 21 s'étendent de l'aval vers l'amont mais il va de soi qu'elles pourraient aussi s'étendre de l'amont vers l'aval. Les extrémités amont des dents 21 sont libres.

Les dents de rapporteur 21 sont des dents ferromagnétiques adaptées pour faire réagir des capteurs inductifs comme cela sera présenté par la suite.

En référence à la figure 6, les dents de rapporteur 21 sont réparties à la circonférence du corps cylindrique 22 de la pièce de rapporteur 20. Dans cet exemple, la pièce de rapporteur 20 comporte cinq dents de rapporteur 21. De manière préférée, la pièce de rapporteur 20 comporte autant de dents de rapporteur 21 que de dents de référent longues 12.

Les dents de rapporteur 21 s'étendent toutes à la même distance radiale R_{b} de l'axe X de la turbomachine, c'est-à-dire, à la même distance radiale que la partie distale 12B des dents de référent longues 12. En outre, les dents de rapporteur 21 s'étendent dans un même plan transversal P2 à l'axe X de la turbomachine comme cela sera détaillé par la suite.

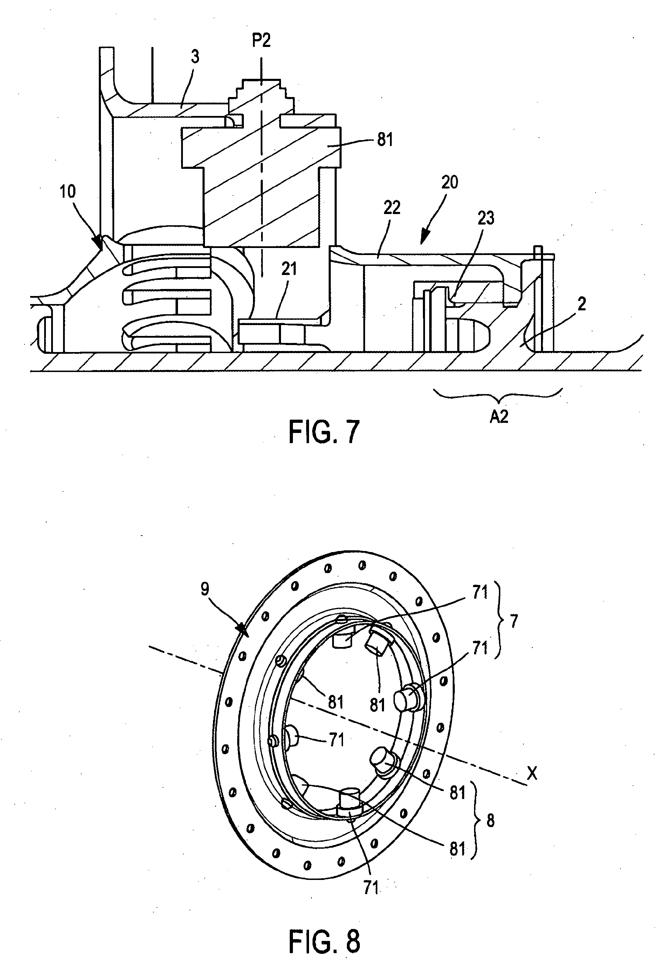

Comme illustré aux figures 2 et 7, la pièce de rapporteur 20 est montée de manière solidaire à l'arbre de turbine 2, extérieurement à ce dernier. Dans l'exemple de la figure 7, l'extrémité aval de la pièce de rapporteur 20 est montée par crabotage sur la deuxième partie aval A2 de l'arbre de turbine 2 afin d'assurer, d'une part, une solidarisation axiale et, d'autre part, une solidarisation en rotation au niveau de la deuxième partie aval A2 de l'arbre de turbine 2. Il va de soi que d'autres moyens de solidarisation pourraient également convenir.

Lors du montage, la pièce de rapporteur 20 est insérée de l'amont vers l'aval pour se fixer à l'arbre de turbine 2 avant d'être verrouillée par un écrou de verrouillage 23. Comme illustré à la figure 7, la pièce de rapporteur 20 s'étend longitudinalement autour de l'arbre de turbine 2 de manière à ce que les dents de rapporteur 21 s'étendent de l'aval vers l'amont. La longueur longitudinale de la pièce de rapporteur 20 est courte par rapport à celle de la pièce de référent 10. Il en résulte que les dents de rapporteur 21 de la pièce de rapporteur 20 permettent de représenter le couple de torsion reçu par l'arbre de turbine au niveau de la deuxième partie aval A2 de l'arbre de turbine 2.

### Moyens de détection 7 et 8

Selon l'invention, la turbomachine 1 comporte des premiers moyens de détection 7 du passage des dents de référent 11, 12 dans le premier plan transversal P1 et des deuxièmes moyens de détection 8 du passage des dents de référent longues 12 et des dents de rapporteur 21 dans le deuxième plan transversal P2.

Les moyens de détection 7, 8 sont solidaires du carter 3 de la turbomachine comme illustré à la figure 2. De préférence, les moyens de détection 7, 8 se présentent respectivement sous la forme de capteurs inductifs 71, 81 s'étendant dans deux plans transversaux distincts P1, P2. Il va de soi que les moyens de détection pourraient être divers, en particulier, des capteurs optiques ou capacitifs pourraient également convenir.

Dans cet exemple, en référence à la figure 8, les capteurs inductifs des premiers et des deuxièmes moyens de détection 7, 8 sont montés solidairement à un support annulaire 9 qui est monté solidairement au carter 3. Toujours en référence à la figure 8, les capteurs inductifs 71, 81 sont orientés radialement vers l'axe X de la turbomachine 1 de manière à détecter le passage des dents 11, 12, 21.

Les capteurs inductifs 71 des premiers moyens de détection 7, désignés par la suite capteurs de vitesse 71, sont répartis à la circonférence du carter 3 dans le premier plan P1 et à une même distance radiale de l'axe X de la turbomachine. De manière similaire, les capteurs inductifs 81 des deuxièmes moyens de détection 8, désignés par la suite capteurs de couple 81, sont répartis à la circonférence du carter 3 dans le deuxième plan P2 et à une même distance radiale de l'axe X de la turbomachine De manière préférée, les capteurs de vitesse 71 et les capteurs de couple 81 sont alternés, c'est-à-dire en quinconce, de manière à limiter le risque d'interférences entre des capteurs 71, 81 n'appartenant pas à un même plan P1, P2 et à limiter l'encombrement.

En outre, les capteurs de vitesse 71 sont plus éloignés de l'axe X de la turbomachine par comparaison aux capteurs de couple 81 de manière à compenser l'écart radial entre la partie distale 12B et la partie proximale 12A des dents de rapporteurs longues 12. Chaque capteur inductif 71, 81 est ainsi à la même distance radiale des dents 11, 12, 21 dont il doit surveiller le passage ce qui est avantageux. De préférence, les capteurs inductifs 71, 81 sont tous identiques et connus de l'homme du métier.

Les moyens de détection 7, 8 sont reliés à un calculateur (non représenté) de la turbomachine 1 qui est adapté pour calculer la vitesse de l'arbre 2 et le couple de torsion en fonction des informations fournies par les moyens de détection 7, 8.

### Exemple de mise en oeuvre

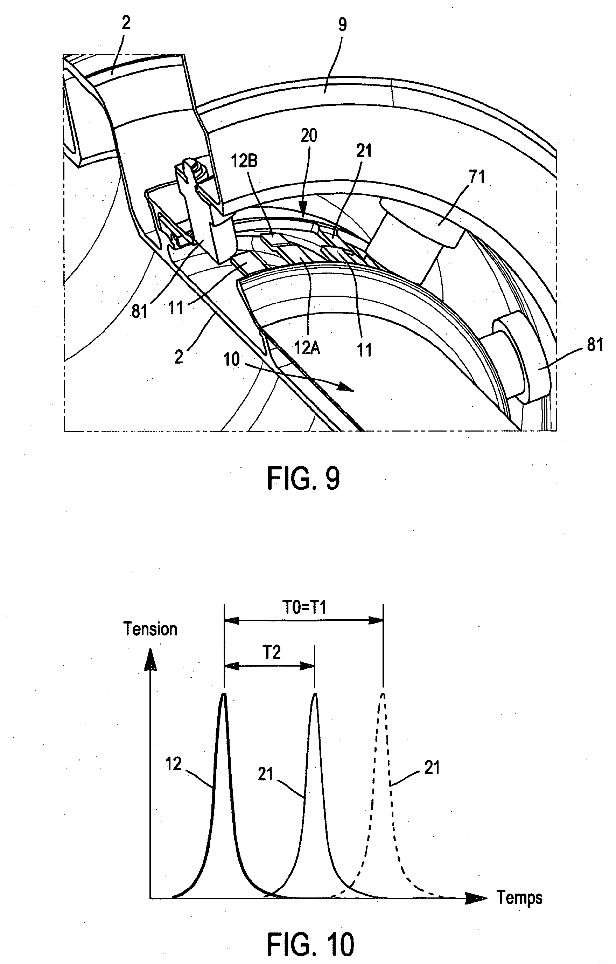

Un exemple de mise en oeuvre de l'invention est représentée aux figures 2 et 9 sur lesquelles la pièce de référent 10 et la pièce de rapporteur 20 sont solidarisées à l'arbre de turbine 2 de manière à ce que la partie distale 12B des dents de référent longues 12 s'étendent dans le même plan transversal P2 que les dents de rapporteur 21.

En référence à la figure 9, dans le premier plan P1, les capteurs de vitesse 71 des premiers moyens de détection 7 surveillent le passage des dents de vitesse de la pièce de référent 10, c'est-à-dire, les dents de référent courtes 11 et la partie proximale 12A des dents de référent longues 12. Du fait de leur nature ferromagnétique, les dents de vitesse 11, 12A font réagir les capteurs de vitesse 71 par induction lors de leur rotation. Ainsi, un capteur de vitesse donné 71 mesure le temps de passage moyen entre deux dents de référent successives. Ainsi, les capteurs de vitesse 71 peuvent en déduire la vitesse de rotation angulaire de la pièce de référent 10 et, par voie de conséquence, la vitesse de rotation de l'arbre de turbine 2 sur lequel la pièce de référent 10 est montée de manière solidaire. Comme les dents de référent courtes 11 et la partie proximale 12A des dents de référent longues 12 sont à la même distance radiale, les capteurs de vitesse 71 mesurent de manière homogène la vitesse de rotation. De préférence, les données des différents capteurs de vitesse 71 sont moyennées pour obtenir la vitesse de l'arbre 1.

La mesure de la vitesse de rotation de l'arbre 2 est réalisée de préférence au moyen de la pièce la plus en amont de manière à permettre une mesure de vitesse en cas de rupture de l'arbre, la pièce la plus en aval n'étant plus entraînée.

Toujours en référence à la figure 9, dans le deuxième plan P2, les capteurs de couple 81 des deuxième moyens de détection 8 surveillent le passage des dents de rapporteur 21 et de la partie distale 12B des dents de référent longues 12. Du fait de leur nature ferromagnétique, lesdites dents 21, 12B font réagir les capteurs de couple 81 par induction lors de leur rotation. Ainsi, un capteur de couple donné 81 mesure le temps de passage entre une dent de référent longue 12 et une dent de rapporteur 21. De manière préférée, l'angle de torsion est mesuré par des capteurs de couple 81 qui sont diamétralement opposés dans le carter 3.

Ainsi, les capteurs de couple 81 peuvent en déduire l'évolution de l'écart angulaire entre une dent de rapporteur 21 et la partie distale 12B d'une dent de référent longue 12 par rapport à un écart angulaire prédéterminé. En effet, lorsque l'arbre de turbine 2 est arrêté, l'écart angulaire entre une dent de rapporteur 21 et la partie distale 12B d'une dent de référent longue 12 est parfaitement défini étant donné que les deux dents 21, 12B sont solidaires de l'arbre de turbine 2 qui est immobile.

Au cours de la rotation de l'arbre de turbine 2, ce dernier subit un couple de torsion autour de son axe X. Ce couple de torsion se traduit par une évolution de l'écart angulaire défini à l'arrêt. Cet écart angulaire est connu de l'homme du métier sous la désignation d'angle de torsion. Comme la pièce de référent 10 et la pièce de rapporteur 20 sont reliées respectivement à des parties amont A1 et aval A2 de l'arbre 2 qui sont distantes l'une de l'autre, toute modification de l'écart angulaire relatif à un couple de torsion entre les positions d'implantation A1, A2 du référent 10 et du rapporteur 20 sur l'arbre de turbine 2 est mis en évidence, l'écart angulaire étant fonction de la distance entre les parties de fixation A1, A2. De manière classique, le couple de torsion est déterminé à partir de tables de calibration qui associent un angle de torsion à un couple de torsion pour un arbre de turbomachine donné.

Un exemple comparatif est illustré à la figure 10 dans lequel sont représentés plusieurs profils de tension mesurés par un capteur de couple 81 lors du passage d'une dent de référent (trait épais), d'une dent de rapporteur pour un arbre de turbine 2 sans torsion (trait discontinu) et d'une dent de rapporteur pour un arbre de turbine 2 avec torsion (trait fin).

Pour un arbre de turbine 2 sans torsion, l'écart angulaire T1 entre une dent de référent 12 et une dent de rapporteur 21 est identique à l'écart angulaire T0 défini à l'état initial lorsque l'arbre 2 est arrêté. Par contre, pour un arbre de turbine 2 avec torsion, l'écart angulaire T2 entre la dent de référent 12 et la dent de rapporteur 21 est différent de l'écart angulaire T0 défini à l'état initial lorsque l'arbre 2 est arrêté. En effet, on remarque sur la figure 10 que le profil de tension de la dent de rapporteur 21 est plus proche du profil de tension de la dent de référent 12 ce qui traduit un rapprochement des dents 12, 21 au cours de la rotation de l'arbre, c'est-à-dire, un couple de torsion. La perturbation du profil de tension permet d'obtenir un écart temporel entre le passage de deux dents. Ensuite, la connaissance de la vitesse de rotation de l'arbre de turbine 2 grâce aux capteurs de vitesse 71 permet de déduire l'écart angulaire recherché.

La turbomachine selon l'invention permet de surveiller la survitesse et le surcouple de l'arbre de turbine 2 en conservant un encombrement limité et une masse limitée. La pièce de référent 10 participe de manière avantageuse à la mesure de vitesse et de couple ce qui permet de limiter la masse de la turbomachine 1. En outre, les plans transversaux de mesure P1, P2 sont proches l'un de l'autre ce qui permet de confiner l'ensemble des moyens de détection 7, 8 à un même lieu ce qui limite l'encombrement de la turbomachine 1.

### Deuxième forme de réalisation

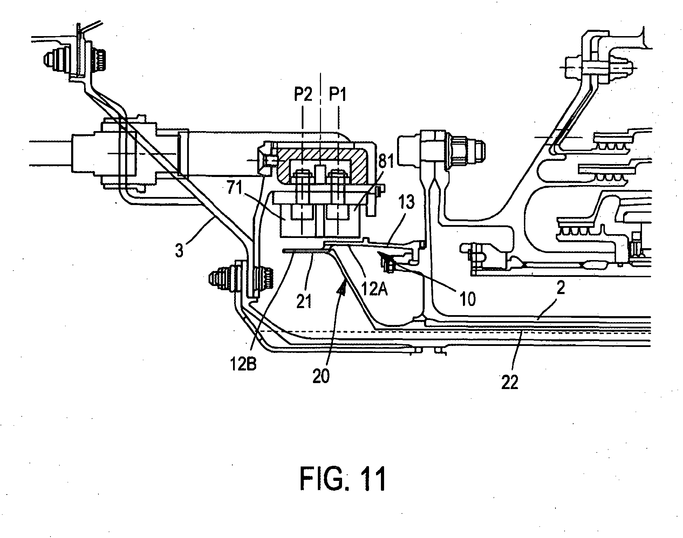

Une deuxième forme de réalisation de l'invention est décrite en référence à la figure 11. Les références utilisées pour décrire les éléments de structure ou fonction identique, équivalente ou similaire à celles des éléments de la figure 2 sont les mêmes, pour simplifier la description. D'ailleurs, l'ensemble de la description du mode de réalisation de la figure 2 n'est pas reprise, cette description s'appliquant aux éléments de la figure 11 lorsqu'il n'y a pas d'incompatibilités. Seules les différences notables, structurelles et fonctionnelles, sont décrites.

Dans la deuxième forme de réalisation de la figure 11, le corps cylindrique 22 de la pièce de rapporteur 20 est radialement intérieur au corps cylindrique 13 de la pièce de référent 10, les dents de rapporteur 21 et les dents de référent 12 s'étendent de l'aval vers l'amont. Dans cet exemple, la pièce de rapporteur 20 est solidarisée en amont de la pièce de référent 10 comme illustré à la figure 11.

### Troisième forme de réalisation

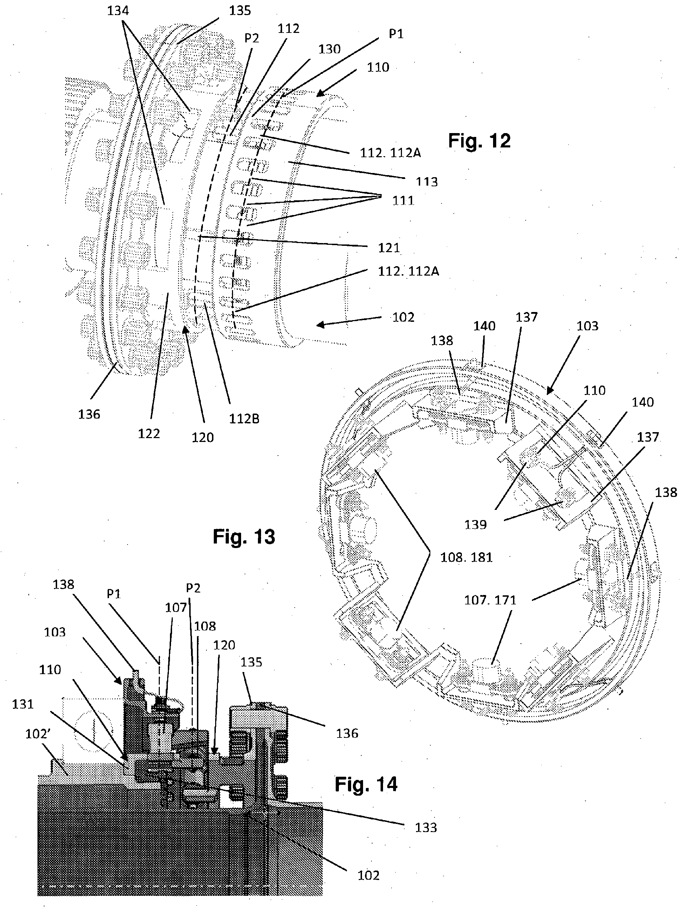

Les figures 12 à 14 représentent une variante de réalisation de l'invention qui diffère de la première forme de réalisation décrit dans ce qui précède notamment par la forme des dents 111, 112, 121 de la pièce de référent 110 et de la pièce de rapporteur 120.

La pièce de référent 110 diffère de la pièce de référent 10 de la première forme de réalisation décrite en référence à la figure 4 essentiellement en ce que ses dents de référent longitudinales courtes 111 sont séparées les unes des autres par des lumières ou ajours (et non pas des encoches). Les dents de référent courtes 111 ont leurs extrémités amont ou proximales reliées au corps cylindrique 113 de la pièce et leurs extrémités aval ou distales reliées à une couronne aval 130 de la pièce. Ceci permet de rigidifier la pièce de référent 110 et de limiter la déflexion sous effort centrifuge des dents de référent longues 112.

Les dents de référent longitudinales longues 112 comportent une partie proximale 112A terminée par une partie distale 112B. La partie proximale 112A de chaque dent de référent longue 112 s'étend à la même distance radiale de l'axe de la turbomachine que les dents de référent courtes 111, entre le corps cylindrique 113 et la couronne 130. Les dents de référent courtes 111 et la partie proximale 112A des dents de référent longues 112 s'étendent donc dans un même plan transversal P1 à l'axe de la turbomachine. Ce premier plan transversal P1 forme le plan de mesure de la vitesse.

La partie distale 112B de chaque dent de référent longue 112 s'étend vers l'amont depuis la couronne 130 et est décalée radialement vers l'intérieur par rapport à sa partie proximale 112A. Les parties distales 112B des dents de référent longues 112 s'étendent dans un même plan transversal P2 à l'axe de la turbomachine. Ce deuxième plan transversal P2 forme le plan de mesure du couple de torsion.

La pièce de référent 110 est montée de manière solidaire à l'arbre de turbine 102, extérieurement à ce dernier. Dans l'exemple de la figure 14, l'extrémité amont de la pièce de référent 110 comporte un rebord radial interne 131 qui est serré axialement contre une face radiale aval d'un arbre intermédiaire 102' (solidaire en rotation de l'arbre de turbine 102) au moyen d'un écrou 133 vissé sur une extrémité aval de cet arbre intermédiaire 102'. L'extrémité amont de la pièce de référent 110 comprend des moyens d'anti-rotation coopérant par liaison de formes avec des moyens complémentaires de l'arbre intermédiaire 102' pour empêcher la rotation de la pièce de référent 110 autour de l'axe longitudinal de la turbomachine.

La pièce de rapporteur 120 diffère de celle 20 de la première forme de réalisation décrite en référence à la figure 6 essentiellement en ce que son corps cylindrique 122 est ajouré et comprend une rangée annulaire d'ajours ou lumières 134, ce qui permet notamment d'alléger la pièce 120. Les pièces de référent 110 et de rapporteur 120 comprennent ainsi des ajours et ont donc des géométries similaires, ce qui permet d'avoir une symétrie des phénomènes parasites d'induction (courants de Foucault dans les pièces), de faciliter le traitement du signal, et d'augmenter la précision des mesures.

Les dents de rapporteur 121 s'étendent toutes à la même distance radiale de l'axe de la turbomachine, et en particulier à la même distance radiale que la partie distale 112B des dents de référent longues 112. En outre, les dents de rapporteur 121 s'étendent dans le plan transversal P2.

La pièce de rapporteur 120 est montée de manière solidaire à l'arbre de turbine 102, extérieurement à ce dernier. Dans l'exemple de la figure 14, l'extrémité aval de la pièce de rapporteur 120 comprend une bride annulaire 135 de fixation par des boulons à une bride annulaire 136 de l'arbre 102.

Les moyens de détection 107, 108 sont similaires à ceux 7, 8 décrits dans ce qui précède. Ils sont solidaires du carter 103 de la turbomachine comme illustré à la figure 14. Ils se présentent ici sous la forme de capteurs inductifs 171, 181 s'étendant dans deux plans transversaux distincts P1, P2. Les capteurs inductifs des premiers et des deuxièmes moyens de détection 107, 108 sont montés solidairement sur des platines 137 solidaires d'un support annulaire monté sur le carter 103. Les capteurs 171, 181 sont orientés radialement vers l'axe de la turbomachine de manière à détecter le passage des dents 111, 112, 121.

Les capteurs inductifs ou de vitesse 171 des premiers moyens de détection 107 sont répartis à la circonférence du carter 103 dans le premier plan P1 et à une même distance radiale de l'axe de la turbomachine. Les capteurs inductifs ou de couple 181 des deuxièmes moyens de détection 108 sont répartis à la circonférence du carter 103 dans le deuxième plan P2 et à une distance radiale de l'axe de la turbomachine, qui est plus faible que celle des capteurs 171. Les capteurs de vitesse 171 et les capteurs de couple 181 sont alternés, c'est-à-dire en quinconce, de manière à limiter le risque d'interférences entre des capteurs 171, 181 n'appartenant pas à un même plan P1, P2 et à limiter l'encombrement.

Les capteurs 171, 181 sont reliés à un calculateur (non représenté) de la turbomachine par l'intermédiaire de câbles électriques 138. Chaque capteur est ici fixé sur sa platine de support 137 par l'intermédiaire de deux vis qui assure la connexion électrique du capteur à deux câbles 138 respectivement. Chaque câble 138 est relié à une extrémité à une cosse 139 qui est traversée par la vis, les câbles 138 qui alimentent chaque capteur forme un harnais électrique qui traverse un orifice radial 140 du support annulaire et qui est relié au calculateur.

## Revendications

1. Turbomachine (1), notamment pour aéronef, comportant au moins un arbre axial (2, 102) monté rotatif dans un carter (3) de la turbomachine (1), la turbomachine (1) comportant :
- une pièce annulaire de référent (10, 110) solidaire d'une première partie (A1) de l'arbre de la turbomachine (1), la pièce de référent (10, 110) comportant des dents de référent longitudinales courtes (11, 111) et longues (12, 112),
- des premiers moyens (7, 107) de détection du passage des dents de référent courtes (11, 111) et longues (12, 112) dans un premier plan transversal (P1) de manière à mesurer la vitesse de l'arbre (2, 102) de la turbomachine (1) autour de son axe (X) ;
- une pièce annulaire de rapporteur (20, 120) solidaire d'une deuxième partie (A2) de l'arbre de la turbomachine (1) distante de ladite première partie (A1), la pièce de rapporteur (20, 120) comportant des dents de rapporteur longitudinales (21, 121), et
- des deuxièmes moyens (8, 108) de détection du passage des dents de référent longues (12, 112) et des dents de rapporteur (21, 121) dans un deuxième plan transversal (P2) de manière à mesurer le couple de torsion de l'arbre (2, 102) de la turbomachine (1).

2. Turbomachine selon la revendication 1, dans laquelle les dents de référent courtes (11, 111) et les dents de rapporteur (21, 121) sont à des distances radiales différentes de l'axe (X) de la turbomachine (1).

3. Turbomachine selon l'une des revendications 1 à 2, dans laquelle chaque dent de référent longue (12, 112) comporte une partie proximale (12A, 112A) et une partie distale (12B, 112B) qui sont à des distances radiales différentes de l'axe (X) de la turbomachine (1).

4. Turbomachine selon la revendication 3, dans laquelle la partie proximale (12A, 112A) de chaque dent de référent longue (12, 112) s'étend à la même distance radiale que les dents de référent courtes (11, 111).

5. Turbomachine selon la revendications 3 ou 4, dans laquelle la partie proximale (12A, 112A) d'une dent de référent longue (12,112) est radialement extérieure à sa partie distale (12B, 112B).

6. Turbomachine selon l'une des revendications 3 à 5, dans laquelle les dents de référent courtes (111) et les parties proximales (112A) des dents de référent longues (112) sont formées par une partie annulaire ajourée de la pièce annulaire de référent (110).

7. Turbomachine selon la revendication 6, dans laquelle les parties distales (112B) des dents de référent longues (112) s'étendent longitudinalement depuis ladite partie annulaire ajourée.

8. Turbomachine selon la revendication 6 ou 7, dans laquelle la partie distale (112B) de chaque dent de référent longue (112) est alignée axialement avec ou décalée angulairement de la partie proximale (112A) de cette dent.

9. Turbomachine selon l'une des revendications 1 à 8, dans laquelle la turbomachine comporte le même nombre de dents de référent longues (12, 112) et de dents de rapporteur (21, 121).

10. Turbomachine selon l'une des revendications 1 à 9, dans laquelle les premiers moyens de détection (7, 107) et les deuxièmes moyens de détection (8, 108) sont à des distances radiales différentes de l'axe (X) de la turbomachine (1).

11. Turbomachine selon l'une des revendications 1 à 10, dans laquelle les premiers moyens de détection (7, 107) et les deuxièmes moyens de détection (8, 108) se présentent respectivement sous la forme de capteurs inductifs de vitesse (71, 171) et de capteurs inductifs de couple (81, 181), les capteurs de vitesse (71, 171) et les capteurs de couple (81, 181) étant identiques.

12. Turbomachine selon la revendication 11, dans laquelle, les capteurs de vitesse (71, 171) et les capteurs de couple (81, 181) sont solidaires du carter (3, 103) de la turbomachine et alternés à la circonférence du carter (3, 103).

13. Procédé de surveillance d'un arbre axial (2, 102) d'une turbomachine (1) monté rotatif dans un carter de la turbomachine (3, 103), la turbomachine comportant une pièce annulaire de référent (10, 110) solidaire d'une première partie (A1) de l'arbre de la turbomachine (1), la pièce de référent (10, 110) comportant des dents de référent longitudinales courtes (11, 111) et longues (12, 112), une pièce annulaire de rapporteur (20, 120) solidaire d'une deuxième partie (A2) de l'arbre de la turbomachine (1) distante de ladite première partie (A1), la pièce de rapporteur (20, 120) comportant des dents de rapporteur longitudinales (21, 121), le procédé comportant :
- une étape de détection du passage des dents de référent courtes (11, 111) et longues (12, 112) dans un premier plan transversal (P1) de manière à mesurer la vitesse de l'arbre (2, 102) de la turbomachine (1) autour de son axe (X) ; et
- une étape de détection du passage des dents de référent longues (12, 112) et des dents de rapporteur (21, 121) dans un deuxième plan transversal (P2) de manière à mesurer le couple de torsion de l'arbre (2, 102) de la turbomachine (1).

## Patentansprüche

1. Eine Turbomaschine (1), insbesondere für ein Flugzeug, die mindestens eine Axialwelle (2, 102) umfasst, welche drehbar in einem Gehäuse (3) der Turbomaschine (1) montiert ist, und wobei die Turbomaschine (1) folgendes umfasst:
- ein ringförmiges Referenzteil (10, 110), das solidarisch mit einem ersten Teil (A1) der Welle der Turbomaschine (1) verbunden ist, wobei das Referenzteil (10, 110) längliche, kurze (11, 111) und lange (12, 112) Referenzzähne umfasst,
- erste Mittel (7, 107) zur Erfassung der Passage der kurzen (11, 111) und langen (12, 112) Referenzzähne in einer ersten sich quer erstreckenden Ebene (P1), um die Wellengeschwindigkeit (2, 102) der Turbomaschine (1) um ihre Achse (X) zu messen;
- ein ringförmiges Winkelmessteil (20, 120), das solidarisch mit einem zweiten Teil (A2) der Welle der Turbomaschine (1) in Entfernung auf das besagte erste Teil (A1) verbunden ist, wobei das Winkelmessteil (20, 120) längliche Winkelmesszähne (21, 121) umfasst, und
- zweite Mittel (8, 108) zur Erfassung der Passage der langen Referenzzähne (12, 112) und der Winkelmesszähne (21, 121) in einer zweiten sich quer erstreckenden Ebene (P2), um das Torsionsmoment der Welle (2, 102) der Turbomaschine (1) zu messen.

2. Turbomaschine gemäß Anspruch 1, in welcher die kurzen Referenzzähne (11, 111) und die Winkelmesszähne (21, 121) sich in unterschiedlichen radialen Abständen zur Achse (X) der Turbomaschine (1) befinden.

3. Turbomaschine gemäß einem der Ansprüche 1 oder 2, in welcher jeder lange Referenzzahn (12, 112) einen proximalen Abschnitt (12A, 112A) und einen distalen Abschnitt (12B, 112B) umfasst, die sich in unterschiedlichen radialen Abständen zur Achse (X) der Turbomaschine (1) befinden.

4. Turbomaschine gemäß Anspruch 3, in welcher der proximale Abschnitt (12A, 112A) jedes langen Referenzzahns (12, 112) über die gleiche radiale Distanz erstreckt als die kurzen Referenzzähne (11, 111).

5. Turbomaschine gemäß einem der Ansprüche 3 oder 4, in welcher der proximale Abschnitt (12A, 112A) eines langen Referenzzahns (12, 112) radial außerhalb seines distalen Abschnitts (12B, 112B) liegt.

6. Turbomaschine gemäß einem der Ansprüche 3 bis 5, in welcher die kurzen Referenzzähne (111) und die proximalen Abschnitte (112A) der langen Referenzzähne (112) durch einen durchbrochenen Teil des kreisförmigen Referenzteils (110) gebildet werden.

7. Turbomaschine gemäß Anspruch 6, in welcher die distalen Abschnitte (112B) der langen Referenzzähne (112) sich vom besagten durchbrochenen kreisförmigen Teil längs erstrecken.

8. Turbomaschine gemäß einem der Ansprüche 6 oder 7, in welcher der distale Abschnitt (112B) jedes langen Referenzzahns (112) axial gemäß dem proximalen Abschnitt (112A) dieses Zahns ausgerichtet oder abgewinkelt versetzt ist.

9. Turbomaschine gemäß einem der Ansprüche 1 bis 8, in welcher die Turbomaschine die gleiche Anzahl langer Referenzzähne (12, 112) und Winkelmesszähne (21, 121) aufweist.

10. Turbomaschine gemäß einem der Ansprüche 1 bis 9, in welcher die ersten Erfassungsmittel (7, 107) und die zweiten Erfassungsmittel (8, 108) sich in radial unterschiedlichen Abständen zur Achse (X) der Turbomaschine (1) befinden.

11. Turbomaschine gemäß einem der Ansprüche 1 bis 10, in welcher die ersten Erfassungsmittel (7, 107) und die zweiten Erfassungsmittel (8, 108) jeweils in der Form von induktiven Geschwindigkeitssensoren (71, 171) und induktiven Drehmomentsensoren (81, 181) präsentieren, wobei die induktiven Drehzahlfühler (71, 171) und die induktiven Drehmomentsensoren (81, 181) identisch sind.

12. Turbomaschine gemäß Anspruch 11, in welcher die Geschwindigkeitssensoren (71, 171) und die Drehmomentsensoren (81, 181) solidarisch mit dem Gehäuse (3, 103) der Turbomaschine verbunden sind und auf dem Gehäuseumfang (3, 103) im Wechsel angebracht sind.

13. Überwachungsverfahren einer Axialwelle (2, 102) einer Turbomaschine (1), die drehbar in einem Gehäuse (3, 103) der Turbomaschine montiert ist, und wobei die Turbomaschine ein ringförmiges Referenzteil (10, 110) umfasst, das solidarisch mit einem ersten Teil (A1) der Welle der Turbomaschine (1) verbunden ist, wobei das Referenzteil (10, 110) längliche, kurze (11, 111) und lange (12, 112) Referenzzähne sowie ein ringförmiges Winkelmessteil (20, 120) umfasst, das solidarisch mit einem zweiten Teil (A2) der Welle der Turbomaschine (1) in Entfernung auf das besagte erste Teil (A1) verbunden ist, wobei das Winkelmessteil (20, 120) längliche Winkelmesszähne (21, 121) umfasst, wobei das Verfahren folgende Schritte umfasst:
- eine Etappe zur Erfassung der Passage der kurzen (11, 111) und langen (12, 112) Referenzzähne in einer ersten sich quer erstreckenden Ebene (P1), um die Wellengeschwindigkeit (2, 102) der Turbomaschine (1), um ihre Achse (X) zu messen, und
- eine Etappe zur Erfassung der Passage der langen Referenzzähne (12, 112) und der Winkelmesszähne (21, 121) in einer zweiten sich quer erstreckenden Ebene (P2), um das Torsionsmoment der Welle (2, 102) der Turbomaschine (1) zu messen.

## Claims

1. Turbine engine (1), in particular for an aircraft, comprising at least one axial shaft (2, 102) rotatably mounted in a casing (3) of the turbine engine (1), the turbine engine (1) comprising:
- an annular reference part (10, 110) which is rigidly connected to a first portion (A1) of the shaft of the turbine engine (1), the reference part (10, 110) comprising short (11, 111) and long (12, 112) longitudinal reference teeth;
- first means (7, 107) for detecting the passage of the short (11, 111) and long (12, 112) reference teeth in a first transverse plane (P1) so as to measure the speed of the shaft (2, 102) of the turbine engine (1) about its axis (X);
- an annular measurement part (20, 120) which is rigidly connected to a second portion (A2) of the shaft of the turbine engine (1) which is remote from said first portion (A1), the measurement part (20, 120) comprising longitudinal measurement teeth (21, 121); and
- second means (8, 108) for detecting the passage of the long reference teeth (12, 112) and the measurement teeth (21, 121) in a second transverse plane (P2) so as to measure the torque of the shaft (2, 102) of the turbine engine (1).

2. Turbine engine according to claim 1, wherein the short reference teeth (11, 111) and the measurement teeth (21, 121) are at different radial distances from the axis (X) of the turbine engine (1).

3. Turbine engine according to either claim 1 or claim 2, wherein each long reference tooth (12, 112) has a proximal portion (12A, 112A) and a distal portion (12B, 112B) that are at different radial distances from the axis (X) of the turbine engine (1).

4. Turbine engine according to claim 3, wherein the proximal portion (12A, 112A) of each long reference tooth (12, 112) extends at the same radial distance as the short reference teeth (11, 111).

5. Turbine engine according to either claim 3 or claim 4, wherein the proximal portion (12A, 112A) of a long reference tooth (12, 112) is radially external to its distal portion (12B, 112B).

6. Turbine engine according to any of claims 3 to 5, wherein the short reference teeth (111) and the proximal portions (112A) of the long reference teeth (112) are formed by a perforated annular portion of the annular reference part (110).

7. Turbine engine according to claim 6, wherein the distal portions (112B) of the long reference teeth (112) extend longitudinally from said perforated annular portion.

8. Turbine engine according to either claim 6 or claim 7, wherein the distal portion (112B) of each long reference tooth (112) is axially aligned with or angularly offset from the proximal portion (112A) of said tooth.

9. Turbine engine according to any of claims 1 to 8, wherein the turbine engine has the same number of long reference teeth (12, 112) and measurement teeth (21, 121).

10. Turbine engine according to any of claims 1 to 9, wherein the first detection means (7, 107) and the second detection means (8, 108) are at different radial distances from the axis (X) of the turbine engine (1).

11. Turbine engine according to any of claims 1 to 10, wherein the first detection means (7, 107) and the second detection means (8, 108) take the form of inductive speed sensors (71, 171) and inductive torque sensors (81, 181) respectively, the speed sensors (71, 171) and the torque sensors (81, 181) being identical.

12. Turbine engine according to claim 11, wherein the speed sensors (71, 171) and the torque sensors (81, 181) are rigidly connected to the casing (3, 103) of the turbine engine and alternate at the circumference of the casing (3, 103).

13. Method for monitoring an axial shaft (2, 102) of a turbine engine (1) which is mounted rotatably in a casing (3, 103) of the turbine engine, the turbine engine comprising an annular reference part (10, 110) rigidly connected to a first portion (A1) of the shaft of the turbine engine (1), the reference part (10, 110) comprising short (11, 111) and long (12, 112) longitudinal reference teeth, an annular measurement part (20, 120) which is rigidly connected to a second portion (A2) of the shaft of the turbine engine (1) which is remote from said first portion (A1), the measurement part (20, 120) comprising longitudinal measurement teeth (21, 121), the method comprising:
- a step of detecting the passage of the short (11, 111) and long (12, 112) reference teeth in a first transverse plane (P1) so as to measure the speed of the shaft (2, 102) of the turbine engine (1) about its axis (X); and
- a step of detecting the passage of the long reference teeth (12, 112) and the measurement teeth (21, 121) in a second transverse plane (P2) so as to measure the torque of the shaft (2, 102) of the turbine engine (1).
